# EUROPEAN PATENT APPLICATION

(11) **EP 4 120 636 A1**
(43) Date of publication of application: **18.01.2023**
(21) Application number: 22306013.8
(22) Date of filing: 07.07.2022
(51) Int. Cl.: H04L 12/40

(54) **COMMUNICATION METHOD, COMMUNICATION DEVICE AND COMMUNICATION SYSTEM**

(30) Priority: 16.07.2021 CN 202110806290
(71) Applicant: Schneider Electric Industries SAS, 92500 Rueil-Malmaison (FR)
(72) Inventor: YING, Xiaoping, Shanghai, 201203 (CN); WANG, Wenhua, Shanghai, 201203 (CN)
(74) Representative: Manitz Finsterwald Patent- und Rechtsanwaltspartnerschaft mbB

(57) **Abstract**

The present disclosure relates to a communication method for a slave device in a master-slave communication structure, comprising: sending a boot report to the master device at power-up to report that the slave device is booting, wherein the boot report includes identity information for the slave device; receiving a heartbeat message from the master device; and if no heartbeat message is received from the master device for more than a predetermined time, the boot report is continuously sent to the master device at predetermined intervals until a feedback message of successful connection is received from the master device. Further, the present disclosure relates to a communication method for a communication system having a master-slave communication structure, a communication device for a slave device in a master-slave communication structure, and a communication system having a master-slave communication structure.

## Description

### TECHNICAL FIELD

The present disclosure relates to a communication method for a slave device in a master-slave communication structure, a communication method for a communication system having a master-slave communication structure, a communication device for a slave device in a master-slave communication structure and a communication system having a master-slave communication structure.

### BACKGROUND

In the field of industrial manufacturing or process control, communication between field devices and control devices is required, for which a digital, serial, multi-point communication data bus is set up, which is also known as a fieldbus. Common fieldbuses include RS422, Ethernet/IP, CAN, etc. For example, CAN (Controller Area Network) bus is widely used today in automotive manufacturing, industrial automation, medical devices and other technical fields. In the case of using CAN bus, the signaling between multiple modules or devices in a system can be realized by only two signal lines, thus greatly reducing the number of harnesses between modules or devices. CAN bus adopts serial data transmission, and when one of the nodes on the CAN bus sends data, it is broadcast to all nodes in the bus in the form of telegrams.

The CAN bus is based on the OSI 7-layer network model defining the first layer (physical layer, ISO 11898-2) and the second layer (data link layer ISO 11898-1), which are fully implemented in hardware. For the application of the CAN bus it is also necessary to define the application layer.

As the need for interconnecting devices grows, an open, standardized protocol is needed to define the application layer so that a unified, standardized communication model can be achieved. The CANopen CiA301 protocol, defined and maintained by CiA (CAN in Automation), is one of the most widely used protocols today. In addition, different sub-protocols have been developed on top of CiA301 for devices in different industries and applications.

In addition to the CMS (CAN-based Message Specification) service function for accessing devices, CANopen also provides the NMT (Network Management) service function for managing devices. Within the framework of the NMT service, the NMT master can control the status of all slave devices, such as initial, pre-operation, operation and stop status. Moreover, the master can confirm the connection with the slave devices through BOOTUP messages and determine whether the connection with the slave devices is interrupted through heartbeat messages.

However, in the event that a fieldbus, such as the CAN bus, is affected by an external environment and becomes abnormal, the communication between master and slave devices can be affected and even interrupted. In this case, the communication between the master and the slave device needs to be restored.

### SUMMARY

The present disclosure provides a communication method for a slave device in a master-slave communication structure, a communication method for a communication system having a master-slave communication structure, a communication device for a slave device in a master-slave communication structure, and a communication system having a master-slave communication structure, whereby communication connection between a master device and a slave device can be automatically re-established in the event that communication between the master device and the slave device is interrupted.

Embodiments of the present disclosure provide a communication method for a slave device in a master-slave communication structure comprising: sending a boot report to a master device at power-up to report that the slave device is booting, wherein the boot report includes identity information for the slave device; receiving a heartbeat message from the master device; and, if no heartbeat message is received from the master device for more than a predetermined time, the boot report is continuously sent to the master device at predetermined intervals until a feedback message of successful connection is received from the master device.

According to an embodiment of the present disclosure, wherein the communication structure uses the CANopen protocol; and the boot report is a BOOTUP message.

According to an embodiment of the present disclosure, wherein the communication method of a slave device further comprises: issuing a failure indication in the event that the heartbeat message from the master device is not received for more than a predetermined time.

The present disclosure also provides a communication method for a communication system having a master-slave communication structure, wherein the communication system includes a master device and a slave device, and wherein the communication method comprises: the slave device sending a boot report to the master device at power-up to report that the slave device is booting, wherein the boot report includes identity information for the slave device; the master device receiving a heartbeat message from the slave device and, if no heartbeat message is received from the slave device for more than a first predetermined time, continuously sending a restore initial state request message to the slave device at a first predetermined time interval to restore the slave device to its initial state until the boot report is received from the slave device again; and the slave device receives the heartbeat message from the master device and, if no heartbeat message is received from the master device for more than a second predetermined time, continuously sends the boot report to the master device at a second predetermined time interval until a feedback message of successful connection is received from the master device.

According to an embodiment of the present disclosure, wherein the communication structure uses the CANopen protocol; the boot report is a BOOTUP message; and the restore initial state request message is an NMT state command.

According to an embodiment of the present disclosure, wherein the communication method of the communication system further comprises: the slave device issuing a failure indication if a heartbeat message from the master device is not received for more than a second predetermined time.

The present disclosure also provides a communication device for a slave device in a master-slave communication structure, comprising: an initial connection unit for sending a boot report to the master device at power-up to report that the slave device is booting, wherein the boot report includes identity information of the slave device; a heartbeat receiving unit for receiving a heartbeat message from the master device; and a reconnection unit for continuously sending the boot report to the master device at predetermined intervals until a feedback message of successful connection is received from the master device, in the event that the heartbeat message from the master device is not received for more than a predetermined time.

According to an embodiment of the present disclosure, wherein the communication structure uses the CANopen protocol; and the boot report is a BOOTUP message.

The present disclosure also provides a communication system having a master-slave communication structure, wherein the communication system comprising master and slave equipment; wherein the slave device sending a boot report to the master device at power-up to report that the slave device is booting, wherein the boot report includes identity information of the slave device; wherein the master device receiving a heartbeat message from the slave device and, if no heartbeat message is received from the slave device for more than a first predetermined time, continuously sending a restore initial state request message to the slave device at a first predetermined time interval to restore the slave device to its initial state until the boot report is received from the slave device again; and wherein the slave device receives the heartbeat message from the master device and, if no heartbeat message is received from the master device for more than a second predetermined time, continuously sends the boot report to the master device at a second predetermined interval until a feedback message of successful connection is received from the master device.

According to an embodiment of the present disclosure, wherein the communication structure uses the CANopen protocol; the boot report is a BOOTUP message; and the restore initial state request message is an NMT state command.

By the communication method for a slave device in a master-slave communication structure, the communication method for a communication system having a master-slave communication structure, the communication device for a slave device in a master-slave communication structure, and the communication system having a master-slave communication structure according to the present disclosure, in the event that communication between the slave device and the master device is interrupted due to interference, failure, and/or abnormality, the master device and the slave device are always able to automatically resume communication between each other after the interference. This eliminates the need for maintenance personnel to visit the site, and thus reduces the cost of restoring communication.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1 illustrates a communication system with a master-slave communication structure, according to embodiments of the present disclosure,
FIG. 2 illustrates the structure of a slave device used in a master-slave communication structure, according to embodiments of the present disclosure,
FIG. 3 illustrates a communication method for a communication system having a master-slave communication structure, in accordance with embodiments of the present disclosure,
FIG. 4 illustrates a communication method for a slave device in a master-slave communication structure, according to embodiments of the present disclosure.

### DETAILED DESCRIPTION

In order to make objects, technical details and advantages of the embodiments of the present disclosure apparent, the technical solutions of the embodiment will be described in a clearly and fully understandable way in connection with the drawings related to the embodiments of the present disclosure. It is obvious that the described embodiments are just a part but not all of the embodiments of the present disclosure. Based on the described embodiments herein, those skilled in the art can obtain other embodiment(s), without any inventive work, which should be within the scope of the present disclosure.

Unless otherwise specified, the technical terms or scientific terms used in the present disclosure should be of general meaning as understood by those ordinarily skilled in the art. In the disclosure, words such as "first", "second" and the like do not denote any order, quantity, or importance, but rather are used for distinguishing different components.

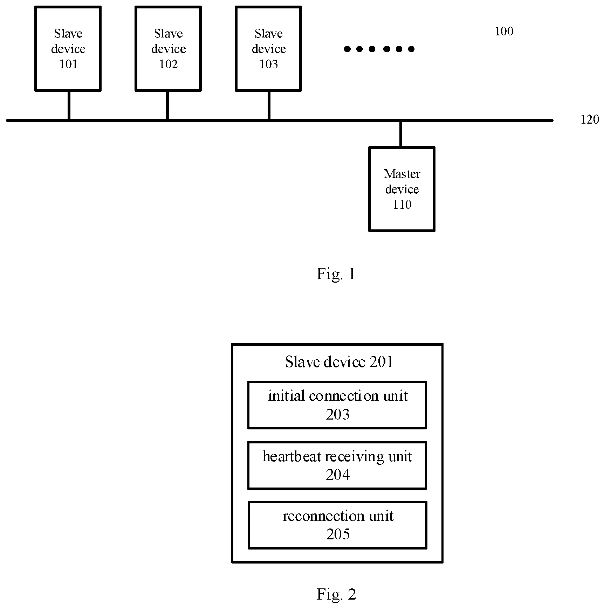

A communication system 100 with a master-slave communication structure according to an embodiment of the present disclosure is illustrated in FIG. 1, in which a master device 110 and three slave devices 101, 102, 103, and of course one or more other numbers of slave devices, are provided, and the master device 110 and the slave devices 101, 102, 103 are connected via a communication line, for example, to a bus 120, respectively. According to the present embodiment of the disclosure, the concept of master and slave devices indicates that the slave devices are managed by the master device. For example, in the case of using a CAN bus, master device 110 may be an NMT master device for network management and bus 120 may be a CAN bus consisting of a high level line CANH and a low level line CANL. In communication operation, the master device and the slave devices can transmit data to each other for communication, while in management operation, the master device can send NMT status commands to each slave device to set its operating state, such as placing it in the initial state, pre-operation state, operation state, and stop state, etc.

In order to establish a communication connection between the slave devices 101, 102, 103 and the master device 110, the slave devices 101, 102, 103 send a boot report to the master device 110 at power-up to report that the slave devices 101, 102, 103 are booting up, wherein the boot report includes information about the identity of the slave devices 101, 102, 103. For example, in the CANopen protocol, this boot report is a BOOTUP message, wherein the BOOTUP message contains the node ID of the slave device. With the BOOTUP message, the NMT master device knows that the corresponding slave device has joined the network and knows the node ID of the slave device. Subsequent to this, the master device 110 can start the management of the slave device, i.e. the status setting.

In order to monitor whether the slave device is online and the current status of the slave device, the slave devices 101, 102, 103 may send heartbeat messages to the master device 110, and the master device 110 receives heartbeat messages from the slave devices 101, 102, 103. If the heartbeat messages from the slave devices 101, 102, 103 are not received after the first predetermined time, the master device 110 continuously sends a restore initial state request message to the slave devices 101, 102, 103 at the first predetermined time interval, and after the slave devices 101, 102, 103 receive the restore initial state request message, the slave devices 101, 102, 103 restore the initial state and able to re-send a boot report to the master device 110. The master device 110 again receives the boot report from the slave devices 101, 102, 103 indicating that the slave devices 101, 102, 103 are successfully connected, and then the master device 110 stops sending the restore initial state request message. According to embodiments of the present disclosure, the first predetermined time and the first predetermined time interval can be predetermined according to the scenario and needs of the application.

For example, in the CANopen protocol, the slave device as producer sends a heartbeat message to the NMT master according to the heartbeat production time filled in its object dictionary, and the NMT master device as consumer receives the heartbeat message according to the heartbeat consumption time filled in its object dictionary. If the NMT master device has not received a heartbeat message from a slave device after a first predetermined time, i.e., after a specific number of heartbeat consumption times, the NMT master device sends an NMT status command to the corresponding slave device. In addition, the NMT master device may also send a fault indication to indicate that the corresponding slave device is offline.

The master device may also send a heartbeat message to the slave device, and the slave device receives the heartbeat message from the master device and, if no heartbeat message is received from the master device for more than a second predetermined time, the slave device sends the boot report to the master device continuously at a second predetermined interval until a feedback message of successful connection is received from the master device. Receipt of the feedback message from the master device by the slave device indicates that the connection between the master device and the slave device has been successful established. The second predetermined time and the second predetermined time interval may be predetermined according to the scenario and needs of the application and may be the same or different from the first predetermined time and the first predetermined time interval.

For example, in the CANopen protocol, the NMT master device can send heartbeat messages in a broadcast manner, i.e. the NMT master device as producer sends heartbeat messages to all slave devices according to the heartbeat production time filled in its object dictionary. If a slave device does not receive a heartbeat message after the second predetermined time, i.e. a specific number of heartbeat consumption times, the corresponding slave device can keep sending BOOTUP messages at the second predetermined time interval, and after the NMT master receives the BOOTUP message, it can send an NMT status command to the corresponding slave device as a feedback message, and stop sending the BOOTUP message. In addition, if the slave device has not received a heartbeat message after a second predetermined time, i.e., a specific number of heartbeat consumption times, the slave device itself can also send a fault indication in order to alert maintenance personnel for inspection and repair.

One of the above-mentioned slave devices 201 in the master-slave communication structure is illustrated in FIG. 2, the slave device 201 being a communication device comprising: an initial connection unit 203 for sending a boot report to the master device at power-up to report that said slave device is started, wherein said boot report includes identity information of the slave device a heartbeat receiving unit 204 for receiving a heartbeat message from the master device; and a reconnection unit 205 for continuously sending said boot report to said master device at predetermined intervals until a feedback message of successful connection is received from said master device, if a heartbeat message from said master device is not received for more than a predetermined time. The above description of the system with reference to FIG. 1 is equally applicable to slave device 201 and will not be repeated here.

For example, for a slave device using the CANopen protocol in the CAN bus, the slave device has a transmitter that sends a BOOTUP message to the NMT master at power-up, wherein the BOOTUP message contains the node ID of the slave device. The slave device also has a receiver that can receive heartbeat messages from the NMT master. In addition, the slave device also has a reconnect unit which can check the heartbeat messages according to the heartbeat consumption time in the object dictionary of the slave device, and if no heartbeat message is received from the master device for more than a predetermined time, i.e., a specific number of heartbeat consumption times, the BOOTUP message is continuously sent to the NMT master device at predetermined intervals until the NMT status command is received from the master.

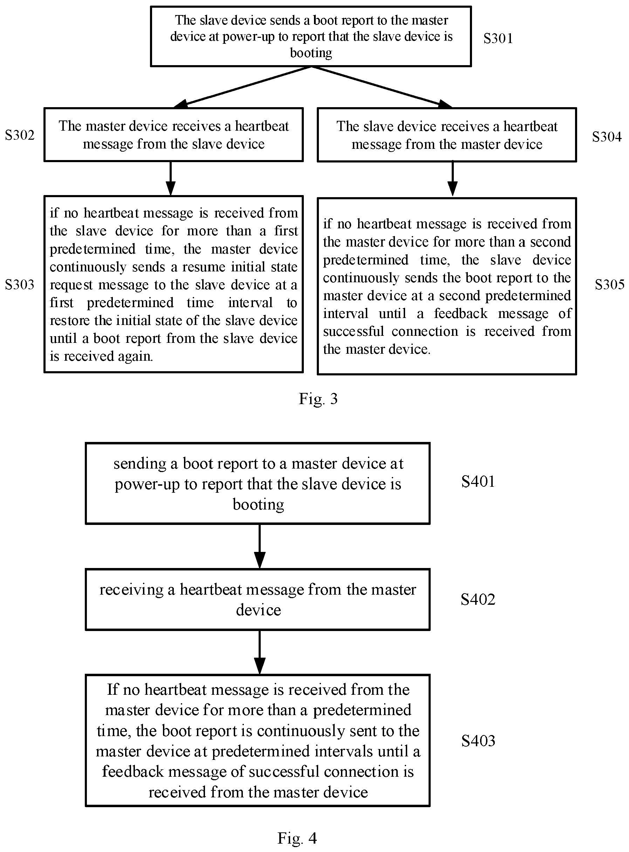

FIG. 3 illustrates a communication method for a communication system having a master-slave communication structure, wherein the communication system includes a master device and a slave device as described above.

In order to establish a communication connection between the slave device and the master device, step S301 is first performed: The slave device sends a boot report to the master device at power-up to report that the slave device is booting, wherein the boot report includes information about the identity of the slave device. For example, in the CANopen protocol, the slave device has to send a boot report, i.e. a BOOTUP message, to the NMT master when connected to the CAN bus, i.e. after power-up, wherein the BOOTUP message contains the node ID of the corresponding slave device. By means of the BOOTUP message, the NMT master knows that the corresponding slave device has joined the network and knows the node ID of the slave device. Based on this, the NMT master can set or change the status of this slave device by the above NMT status command.

In order to monitor whether the slave device is online and the current status of the slave device, the master device performs step S302: Receives a heartbeat message from the slave device. For example, in the CANopen protocol, the slave device as producer sends a heartbeat message to the NMT master device according to the heartbeat production time filled in its object dictionary, and the NMT master device as consumer receives the heartbeat message according to the heartbeat consumption time filled in its object dictionary.

In the event, for example, of communication system interference or failure, the heartbeat message and other data information from the slave device may not reach the master device, and the restore initial state request message and other data information from the master device may not reach the slave device. In this case, the master device performs step S303: If no heartbeat message is received from the slave device for more than a first predetermined time, the master device continuously sends a resume initial state request message to the slave device at a first predetermined time interval to restore the initial state of the slave device until a boot report from the slave device is received again. For example, in the CANopen protocol, if the NMT master device has not received a heartbeat message from a slave device after a first predetermined time, e.g. after a specific number of heartbeat consumption times, the NMT master device may continuously send a restore initial state request message to the corresponding slave device at a first predetermined time interval. After the corresponding slave device receives the restore initial state request message, the slave device restores its initial state and can send BOOTUP information to the NMT master device again. The NMT master device receives the BOOTUP information from the slave device again, indicating that the slave device is successfully connected, and the NMT master device stops sending the restore initial state request message.

In addition to the above-mentioned cases of communication system interference or failure, the inventors of the present disclosure also found that in the case where the communication system is affected by the external environment, such as drastic changes in temperature or strong electromagnetic wave interference, the communication system may have the following anomalies, i.e., the heartbeat messages and other data messages sent by the slave device can reach the master device, while the restore initial state request messages, the heartbeat messages, heartbeat messages and other data messages sent by the master device cannot reach the slave device. In this case, the master device assumes that the slave device is not offline and operating normally, so the master device does not send a restore initial state request message to the slave device to bring it back to its initial state. For this problem, the slave device can also perform step S304: The slave device receives a heartbeat message from the master device. For example, in the CANopen protocol, the NMT master device may send heartbeat messages in a broadcast manner, i.e. the NMT master device as producer sends heartbeat messages to all nodes, i.e. all slave devices, according to the heartbeat production time filled in its object dictionary; and step S305: If no heartbeat message is received from the master device for more than a second predetermined time, the slave device continuously sends the boot report to the master device at a second predetermined interval until a feedback message of successful connection is received from the master device. For example, in the CANopen protocol, if the slave device does not receive a heartbeat message from the NMT master device for more than a second predetermined time, i.e. a specific number of heartbeat consumption times, the slave device sends a boot report, i.e. a BOOTUP message, to the NMT master device continuously at a second predetermined interval. Based on each BOOTUP message, the NMT master sends the NMT status command to the slave device. In case the above-mentioned anomaly in the CAN bus disappears or is eliminated, the slave device can receive the NMT status command from the NMT master device and thus enters the operating state and communication between the slave device and the NMT master device is resumed.

A communication method for a slave device in a master-slave communication structure is illustrated in FIG. 4, comprising step S401: Sending a boot report to a master device at power-up to report that the slave device is booting, wherein the boot report includes identity information of the slave device; step S402: Receiving a heartbeat message from the master device; step S403: If no heartbeat message is received from the master device for more than a predetermined time, the boot report is continuously sent to the master device at predetermined intervals until a feedback message of successful connection is received from the master device. The above description for the communication system and its method and the slave device is also applicable to the communication method of the slave device and will not be repeated herein.

For example, in the CANopen protocol, when a slave device is connected to the CAN bus, i.e. after power-up, it sends a boot report to the NMT master, i.e. a BOOTUP message, which contains the node ID of the corresponding slave device. Through the BOOTUP message, the NMT master knows that the corresponding slave device has joined the network and knows the node ID of the slave device. The slave device can thus receive the heartbeat information from the NMT master device. Therefore, the NMT master device can set or change the state of this slave device by the above-mentioned NMT state command. In the abnormal situation described above, the master device assumes that the slave device is not offline and is operating normally, so the master device does not send a restore initial state request message to the slave device to bring it back to the initial state. In this case, if the slave device does not receive a heartbeat message from the NMT master device for more than a predetermined time, i.e., the second predetermined time mentioned above, the slave device sends a boot report, i.e., a BOOTUP message, to the NMT master device continuously at a second predetermined interval. Based on each BOOTUP message, the NMT master sends the NMT status command to the slave device. In the case that the above mentioned anomaly in the CAN bus disappears or is removed, the slave device is able to receive the NMT status command from the NMT master device and communication between the slave device and the NMT master device is thereby resumed.

The communication system having a master-slave communication structure and the communication method thereof and the communication device for a slave device in a master-slave communication structure and the communication method thereof according to embodiments of the present disclosure enable communication between the master device and the slave device to be automatically restored after the interference, failure and/or anomaly disappears, thereby eliminating the need for maintenance personnel to visit the site for manual restoration, thereby greatly reducing maintenance costs. In particular, in an abnormal situation where messages and data from the slave device can reach the master device and messages and data from the master device cannot reach the slave device, the communication between the master device and the slave device can still be automatically restored after the interference, fault and/or abnormality disappears, thereby eliminating the need for maintenance personnel to visit the site for manual restoration.

The block diagrams of the circuits, units, devices, apparatus, equipment, systems involved in this disclosure are intended as exemplary examples only and do not purport to require or imply that they must be connected, arranged, configured in the manner illustrated in the block diagrams. As will be recognized by those skilled in the art, these circuits, units, devices, apparatus, equipment, systems may be connected, arranged, configured in any manner that will achieve the desired purpose. The circuits, units, devices, and apparatuses involved in this disclosure may be implemented in any suitable manner, such as by using a dedicated integrated circuit, field programmable gate array (FPGA), etc., or by using a general purpose processor in combination with a program.

The above is only the specific embodiments of the present disclosure, but the protection scope of the present disclosure is not limited thereto. Any change or substitution that can be easily thought of by those skilled in the art within the technical scope disclosed in the present disclosure should be covered within the protection scope of the present disclosure. Therefore, the protection scope of the present disclosure shall be subject to the protection scope of the claims.

## Claims

1. A communication method for a slave device in a master-slave communication structure, comprising
- sending a boot report to the master device at power-up to report that the slave device is booting, wherein the boot report includes identity information for the slave device;
- receiving a heartbeat message from the master device; and
- if no heartbeat message is received from the master device for more than a predetermined time, the boot report is continuously sent to the master device at predetermined intervals until a feedback message of successful connection is received from the master device.

2. The communication method according to claim 1, wherein
the communication structure uses the CANopen protocol; and
the boot report is a BOOTUP message.

3. The communication method according to claim 1 or 2, further comprising issue a fault indication in the event that the heartbeat message from the master device is not received for more than a predetermined time.

4. A communication method for a communication system having a master-slave communication structure, wherein the communication system includes a master device and a slave device, and wherein the communication method comprises
- the slave device sending a boot report to the master device at power-up to report that the slave device is booting, wherein the boot report includes identity information for the slave device;
- the master device receiving a heartbeat message from the slave device and, if no heartbeat message is received from the slave device for more than a first predetermined time, continuously sending a restore initial state request message to the slave device at a first predetermined time interval to restore the slave device to its initial state until the boot report is received from the slave device again; and
- the slave device receives a heartbeat message from the master device and, if no heartbeat message is received from the master device for more than a second predetermined time, continuously sends the boot report to the master device at a second predetermined time interval until a feedback message of successful connection is received from the master device.

5. The communication method according to claim 4, wherein
the communication structure described uses the CANopen protocol;
the boot report is a BOOTUP message; and
the restore initial state request message is an NMT state command.

6. The communication method according to claim 4 or 5, further comprising,
the slave device issues a failure indication if a heartbeat message from the master device is not received for more than a second predetermined time.

7. A communication device for a slave device in a master-slave communication structure, comprising,
- an initial connection unit for sending a boot report to the master device at power-up to report that the slave device is booting, wherein the boot report includes identity information of the slave device;
- a heartbeat receiving unit for receiving a heartbeat message from the master device; and
- a reconnection unit for continuously sending the boot report to the master device at predetermined intervals until a feedback message of successful connection is received from the master device, in the event that the heartbeat message from the master device is not received for more than a predetermined time.

8. The communication device according to claim 7, wherein
the communication structure uses the CANopen protocol; and
the boot report is a BOOTUP message.

9. A communication system having a master-slave communication structure, wherein
the communication system comprising master and slave equipment;
the slave device sending a boot report to the master device at power-up to report that the slave device is booting, wherein the boot report includes identity information of the slave device;
the master device receiving a heartbeat message from the slave device and, if no heartbeat message is received from the slave device for more than a first predetermined time, continuously sending a restore initial state request message to the slave device at a first predetermined time interval to restore the slave device to its initial state until the boot report is received from the slave device again; and
the slave device receives the heartbeat message from the master device and, if no heartbeat message is received from the master device for more than a second predetermined time, continuously sends the boot report to the master device at a second predetermined interval until a feedback message of successful connection is received from the master device.

10. The communication system according to claim 9, wherein
the communication structure described uses the CANopen protocol;
the boot report is a BOOTUP message; and
the restore initial state request message is an NMT state command.
